# EUROPEAN PATENT APPLICATION

(11) **EP 2 611 077 A1**
(43) Date of publication of application: **03.07.2013**
(21) Application number: 12005847.4
(22) Date of filing: 13.08.2012
(51) Int. Cl.: H04L 12/28

(54) **Controlling HDMI Devices Via Intelligent Emulation of Consumer Electronics Control (CEC) Protocol**

(30) Priority: 29.12.2011 US 201113339820
(71) Applicant: Broadcom Corporation, Irvine, CA 92617 (US)
(72) Inventor: Loo, Patrick, Cambridge, CB24 9LD (GB); Zhang, Jian, Mountain View, CA 94040 (US)
(74) Representative: Jehle, Volker Armin

(57) **Abstract**

Disclosed are various embodiments of a Consumer Electronics Control (CEC) bridge (140-SNK). In one embodiment, a CEC bridge includes an HDMI interface (130), a network interface (150), a processor, and code executable by the processor. The code includes logic that emulates a CEC command directed to any of a cluster of remote HDMI devices (120-SRC-A, 120-SRC-B), wherein none of the remote HDMI devices are coupled to the device through the HDMI interface.

## Description

### BACKGROUND

Various technologies are emerging that allow digital video to be communicated between various media devices. Some technologies also allow device control commands to be communicated between the devices. In one of these technologies, High Definition Multimedia Interface (HDMI), the control mechanism is known as Consumer Electronics Control (CEC). When consumers mix and match digital media devices from different vendors, interoperability is often problematic, because different vendors often use different sets of CEC commands. Problems may also arise when these devices are two far apart to be physically connected together.

### BRIEF SUMMARY OF THE INVENTION

According to an aspect of the invention, a device comprises:
an HDMI interface;
a network interface;
at least one processor; and
code executable by the at least one processor, the code comprising:
   logic that emulates a CEC command directed to any of a cluster of remote HDMI devices, wherein none of the remote HDMI devices are coupled to the device through the HDMI interface.

Advantageously, the code further comprises:
logic that communicates with a remote CEC emulation device over the network interface, wherein the remote HDMI devices are coupled to the remote CEC emulation device through another HDMI interface.

Advantageously, the code further comprises:
logic that receives the CEC command directed to one of the remote HDMI devices; and
logic that forwards the CEC command over the network interface.

Advantageously, the code further comprises:
logic that determines whether translation of the CEC command is appropriate; and
logic that, when translation is determined to be appropriate, translates the CEC command before forwarding the CEC command over the network interface.

Advantageously, the code further comprises:
logic that receives a CEC emulation message over the non-HDMI interface, the emulation message including a CEC logical address assignment for one of the remote HDMI devices coupled through the HDMI interface,
wherein the logic that emulates begins emulation of the one of the remote HDMI devices after receiving the CEC logical address assignment.

Advantageously, the code further comprises:
logic that receives a CEC emulation message over the non-HDMI interface, the emulation message including a request for a CEC logical address assignment for one of the remote HDMI devices;
logic that determines whether a conflict exists between the CEC logical address and any of a cluster of local HDMI devices coupled through the HDMI interface;
wherein the logic that emulates begins emulation of the one of the remote HDMI devices after determining that no conflict exists.

According to an aspect, a system comprises:
a sink-side bridge including a first HDMI interface and a first network interface,
a source-side bridge including a second HDMI interface and a second network interface; and
the sink-side bridge configured to:
   discover any of a cluster of first HDMI devices coupled through the first HDMI interface, the plurality of first HDMI devices including an HDMI sink device; and
   notify the source-side bridge, via the first network interface, of a corresponding CEC logical address assignment for each of the discovered first HDMI devices;
the source-side bridge configured to:
   discover any of a cluster of second HDMI devices coupled through the second HDMI interface; and
   request from the sink-side bridge, via the second network interface and in response to a received notification from the sink-side bridge, a CEC logical address assignment for each of the discovered second HDMI devices.

Advantageously, the sink-side bridge is further configured to:
allocate, in response to the request from the source-side bridge, a CEC logical address for each of the discovered second HDMI devices; and
reply to the request from the source-side bridge with an indication of the allocated CEC logical address for each of the discovered second HDMI devices.

Advantageously, the sink-side bridge is further configured to determine whether the allocation of each of the CEC logical addresses failed, wherein the indication in the reply includes a failure indication for any of the CEC logical addresses for which the allocation failed.

Advantageously, the sink-side bridge is further configured to determine whether a CEC bus included the first HDMI interface is powered on, wherein the reply is conditional on the determination that the CEC bus is powered on.

Advantageously, the request includes a requested CEC logical address for each of the discovered second HDMI devices, and the sink-side bridge is further configured to determine whether a conflict exists for each of the requested CEC logical addresses, and wherein the indication in the reply includes an unregistered address indication for any of the CEC logical addresses for which a conflict exists.

Advantageously, the source-side bridge is further configured to:
receive the reply from the sink-side bridge; and
in response to the reply including the unregistered address indication, deassert and then reassert a HotPlugDetect signal on the second HDMI interface.

Advantageously, the source-side bridge is further configured to:
receive the notification from the sink-side bridge, the notification including an assigned CEC logical address for each of the discovered first HDMI devices; and
determine whether a conflict exists between any of the assigned CEC logical addresses for the discovered first HDMI devices and the requested CEC logical address for each of the discovered second HDMI devices; and
in response to the determination that a conflict exists, deassert and then reassert a HotPlugDetect signal on the second HDMI interface.

Advantageously, the source-side bridge is further configured to resolve conflicting addresses on the source side, wherein the request is performed by the source-side bridge in response to the resolution.

According to an aspect, a method comprises the steps of:
a sink-side bridge discovering any of a cluster of first HDMI devices coupled to the sink-side bridge through a first HDMI interface, the plurality of first HDMI devices including an HDMI sink device;
a source-side bridge discovering any of a cluster of second HDMI devices coupled to the source-side bridge through a second HDMI interface;
the sink-side bridge notifying the source-side bridge, via a non-HDMI network, of a corresponding CEC logical address assignment for each of the discovered first HDMI devices; and
the source-side bridge requesting from the sink-side bridge, via the non-HDMI network and in response to the received notification from the sink-side bridge, a CEC logical address assignment for each of the discovered second HDMI devices.

Advantageously, the method further comprises the step of:
the sink-side bridge emulating CEC behavior of each of the discovered second HDMI devices.

Advantageously, the method further comprises the step of:
the source-side bridge emulating CEC behavior of each of the discovered first HDMI devices.

Advantageously, the method further comprises the step of:
the sink-side bridge allocating, in response to the request from the source-side bridge, a CEC logical address for each of the discovered second HDMI devices; and
the sink-side bridge replying to the request from the source-side bridge with an indication of the allocated CEC logical address for each of the discovered second HDMI devices.

Advantageously, the method further comprises the step of:
the sink-side bridge periodically polling the CEC logical addresses assigned to the first HDMI devices; and
in response to receiving no acknowledgement from one of the polled CEC logical addresses, the sink-side bridge sending a logical address removal message to the source-side bridge.

Advantageously, the method further comprises the step of:
the source-side bridge periodically polling the CEC logical addresses assigned to the second HDMI devices; and
in response to receiving no acknowledgement from one of the polled CEC logical addresses, the source-side bridge sending a logical address removal message to the sink-side bridge.

### BRIEF DESCRIPTION OF THE DRAWINGS

Many aspects of the present disclosure can be better understood with reference to the following drawings. The components in the drawings are not necessarily to scale, emphasis instead being placed upon clearly illustrating the principles of the disclosure. Moreover, in the drawings, like reference numerals designate corresponding parts throughout the several views.

FIG. 1 is a block diagram of a networked environment according to one embodiment of the present disclosure.

FIG. 2 is a block diagram of an emulated HDMI environment according to some embodiment of the present disclosure.

FIG. 3 is a block diagram illustrating selected components of the CEC bridge of FIG. 1, according to some embodiment of the present disclosure.

FIG. 4 is a diagram that illustrates interactions between the source bridge of FIG. 1 and the sink bridge of FIG. 1, according to some embodiments disclosed herein.

FIG. 5 is a diagram that illustrates asynchronous event handling by the sink bridge of FIG. 1, according to some embodiments disclosed herein.

FIG. 6 is a diagram that illustrates asynchronous event handling by the source bridge of FIG. 1, according to some embodiments disclosed herein.

FIG. 7 is a block diagram of the CEC bridge of FIG. 1, according to various embodiments of the present disclosure.

### DETAILED DESCRIPTION

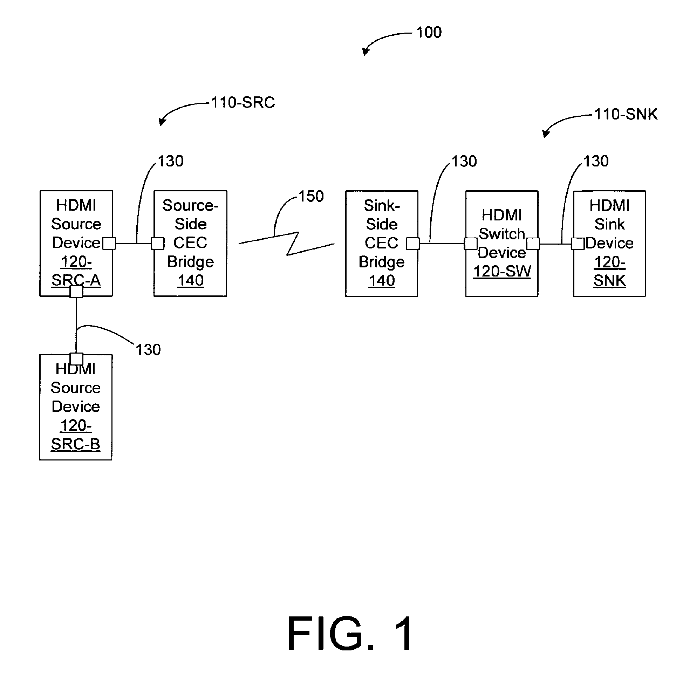

FIG. 1 illustrates an HDMI environment 100 according to various embodiments of the present disclosure. The HDMI environment 100 includes two HDMI clusters 110. An HDMI cluster 110 includes one or more HDMI devices 120, each coupled to the other through a corresponding HDMI link 130. One of the HDMI clusters 110 includes an HDMI sink device 120-SNK (e.g., a television). One or both HDMI clusters 110 include HDMI source devices 120-SRC (e.g., digital video disk (DVD) player, set-top box, etc.).

As the names suggest, HDMI sources provide digital video to the HDMI sink, and a user views the content from the HDMI sink. A source device may also function as a switch, shown here as 120-SW. As its name suggests, an HDMI switch receives multiple digital video inputs and selects one of them as the output. Any cluster that includes a HDMI sink device is referred to herein as a sink cluster 110-SNK. Any cluster that does not include a HDMI sink device is referred to herein as a source cluster 110-SRC.

The HDMI environment 100 also includes a pair of Consumer Electronics Control (CEC) bridges 140 which communicate with each other via a network link 150. The network link 150 can be implemented with any communication technology other than HDMI, and includes wireless technologies such as WiFi, WiMax, etc. as well as wired technologies such as Ethernet, optical fiber, and hybrid fiber coax. Each CEC bridge 140 is coupled to one of the HDMI clusters 110 through a corresponding HDMI link 130. The CEC bridge 140 coupled to the source cluster 110-SRC is referred to herein as the source bridge 140-SRC. The CEC bridge 140 coupled to the sink cluster 110-SNK is referred to herein as the sink bridge 140-SNK.

Each HDMI device 120 implements the CEC protocol specified in the HDMI standard. The CEC protocol assigns each HDMI device 120 a logical address. HDMI devices 120 use these logical addresses to send commands which control the operation of other HDMI devices 120. For example, a DVD player can power on a TV and switch an audio/video receiver to the DVD input. CEC also includes remote control pass-through functionality that allows a user to operate all devices with any one remote control. For example, CEC allows a user to control the TV and the DVD with the TV remote handset, or to control the TV and the DVD with the DVD remote handset.

Each HDMI device 120 is made aware of the CEC logical addresses assigned to the other devices through an address reporting mechanism. In other words, the HDMI devices 120 are made visible to each other in the CEC logical address space. The CEC protocol itself assures that devices in the same HDMI cluster 110 are naturally visible to each other as a result of being coupled to each other through the daisy-chained HDMI links 130. For example, HDMI device 120-SRC-A and HDMI device 120-SRC-B are naturally visible to each other. However, the CEC protocol does not extend to devices which are not coupled through an HDMI link 130. To address this deficiency, the CEC bridge 140 makes devices in HDMI cluster 110-SRC visible to devices in HDMI cluster 110-SNK, and vice versa, despite the lack of an HDMI link 130 between such devices. That is, the CEC bridge 140 uses the non-HDMI network link 150 to bridge the HDMI networks, at least with regard to CEC commands. The CEC bridge 140 may also carry digital media traffic between the HDMI networks. However, this is not a requirement, as the function of bridging digital media traffic may be performed instead by a media bridge. When present, the digital media bridge may be integrated with the CEC bridge 140, or may be a separate device.

Although the operation of the CEC bridge 140 is discussed herein in terms of cooperation between a sink bridge 140-SNK and a source bridge 140-SRC, it should be appreciated that a particular device may include both sets of functionality. That is, a device may include logic to implement a sink bridge 140-SNK and logic to implement a source bridge 140-SRC, though at any one time a particular device is operating as one or the other. In some embodiments, a device may automatically switch its mode of operation between a source bridge 140-SRC and a sink bridge 140-SNK, for example, based on whether an HDMI sink device is coupled to the device through the HDMI link 130. Furthermore, some embodiments may include more than one CEC bridge 140 performing the source or sink role. That is, the sink side of a bridge 140-SNK may be connected in series to the source side of another bridge 140-SRC and so forth.

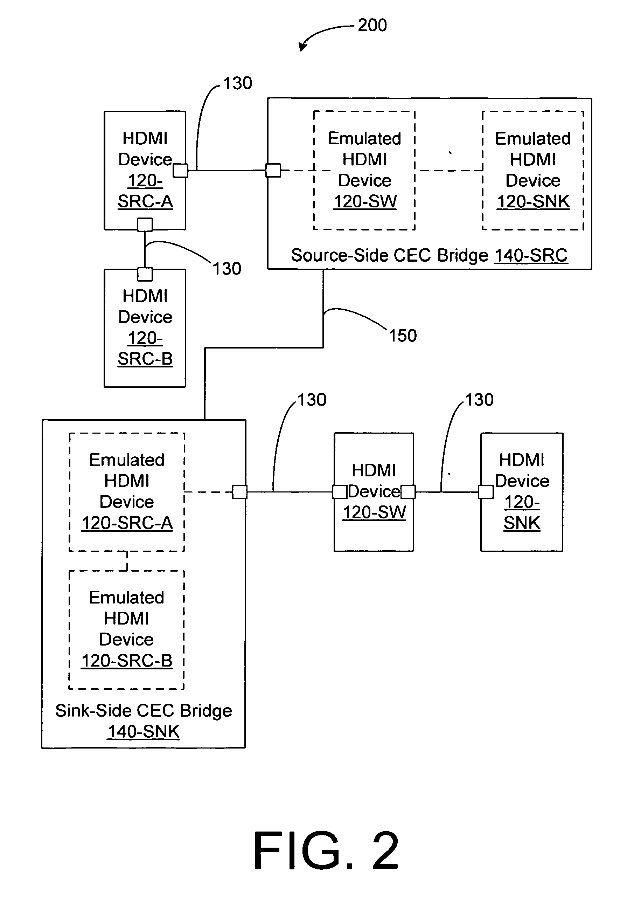

FIG. 2 is a block diagram of an emulated HDMI environment 200. To make the HDMI devices 120 visible in the CEC address space across different clusters, the CEC bridge 140 performs CEC command forwarding and CEC command emulation. The CEC bridge 140 forwards CEC packets between the two HDMI networks, using the non-HDMI network. Furthermore, each half of the CEC bridge 140 emulates CEC operation of the HDMI devices 120 in the other HDMI cluster 110: the sink bridge 140-SNK, located on the side of the HDMI sink, emulates CEC operation of the devices in source cluster 110-SRC; the source bridge 140-SRC, located on the side opposite from the HDMI sink, emulates CEC operation of the devices in HDMI cluster 110-SNK.

This CEC command emulation behavior can be seen in the diagram of FIG. 2. The source bridge 140-SRC emulates HDMI device 120-SW and HDMI device 120-SNK in sink cluster 110-SNK, thus making HDMI devices 120-SW and 120-SNK visible to HDMI devices 120-SRC-A and 120-SRC-B. Similarly, the sink bridge 140-SNK emulates HDMI device 120-SRC-A and HDMI device 120-SRC-B in source cluster 110-SRC, thus making HDMI devices 120-SRC-A and 120-SRC-B visible to HDMI devices 120-SW and 120-SNK.

As should be appreciated, the CEC protocol includes a polling command through which one HDMI device 120 determines whether a particular CEC logical address is in use by another HDMI device 120. An HDMI device 120 already using the logical address responds to the polling command with an acknowledgement. If no other HDMI device 120 acknowledges, then the polling HDMI device 120 knows the logical address is available for its own use. As part of CEC command emulation, each side of the CEC bridge 140 responds to polls addressed to the HDMI devices 120 that it is emulating. In the configuration of FIG. 1, source bridge 140-SRC responds to polls directed to HDMI device 120-SW and HDMI device 120-SNK, while sink bridge 140-SNK responds to polls directed to HDMI device 120-SRC-A and HDMI device 120-SRC-B.

In order to emulate CEC operation, the pair of bridges 140 cooperate to exchange the CEC logical addresses of their respective HDMI devices 120. Notably, the exchange of address information between the two is asymmetrical. The sink bridge 140-SNK notifies the source bridge 140-SRC of logical addresses that are in use by HDMI devices 120 on the sink side. However, the source bridge 140-SRC requests usage of logical addresses for HDMI devices 120 on its own side. Thus, the sink bridge 140-SNK can be viewed as the master and the source bridge 140-SRC as the slave. Having the sink bridge 140-SNK direct the assignment of logical addresses across clusters allows the existing HDMI mechanism for reallocating logical addresses within a cluster to be leveraged. Deassertion followed by reassertion (hereafter referred to as pulsing) of the HDMI Hot Plug signal causes all HDMI devices 120 in a cluster to undergo the CEC logical address assignment procedure, but only an HDMI sink device can pulse Hot Plug. Therefore, in the embodiments disclosed herein, the sink bridge 140-SNK is the one that initiates logical address assignment at power up and at HotPlug assertion. This in turn triggers the source cluster to initiate logical address assignment.

Once the logical addresses of all HDMI devices 120 are emulated on one side of the CEC bridge 140, the CEC bridge 140 forwards CEC packets between the two HDMI clusters 110. For example, in the configuration of FIG. 1, the CEC bridge 140 forwards a CEC command sent from the HDMI device 120-SRC-A to the HDMI device 120-SNK. Forwarding operates as follows. When the CEC bridge 140 attached to one of the HDMI clusters 110 receives, over the network link 150, a CEC packet that originates from a CEC-emulated HDMI device 120 located on the other HDMI cluster 110, the received CEC packet is transmitted on the HDMI link 130. Similarly, when the CEC bridge 140 receives a CEC packet on the HDMI link 130 that is destined for a CEC-emulated HDMI device 120 located on the other HDMI cluster 110, the received CEC packet is transmitted on the network link 150.

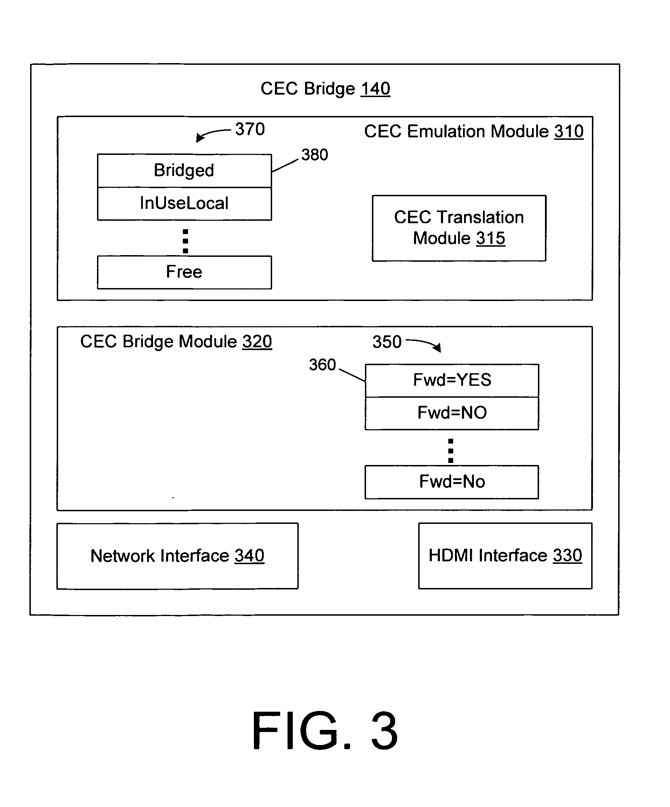

In order to perform CEC command forwarding, each CEC bridge 140 tracks which CEC addresses are assigned to local devices, which are emulated on behalf of remote devices, and which are unassigned. One example of a mechanism for such tracking will now be described in connection with FIG. 3.

FIG. 3 is a block diagram showing selected components that are internal to a CEC bridge 140, according to some embodiments disclosed herein. The CEC bridge 140 includes a CEC emulation module 310, a CEC forwarding module 320, and an optional CEC commands translation module 315. The translation module 315 may be used if the devices in the source cluster 110-SRC and sink cluster 110-SNK use different sets of CEC commands. In such a scenario, the CEC bridge 140 can discover the vendor of a device and thus can translate (where appropriate) a CEC command sent from devices implemented by one vendor to another command understood by devices implemented by another vendor. This functionality is referred to herein as intelligent emulation. It should be noted that translation is not possible when HDMI devices 120 from different vendors are directly connected via an HDMI link 130.

The CEC bridge 140 also includes an HDMI interface 330, connected to the HDMI link 130, and a non-HDMI interface 340, connected to the network link 150. The CEC forwarding module 320 receives, processes and forwards CEC packets as described above using a forwarding table 350. The forwarding table 350 includes entries 360 which indicate whether packets received on the HDMI link 130 for a particular CEC address should be forwarded on the network link 150. In some embodiments, a forwarding table entry 360 is a Boolean value, where a value of True indicates that forwarding will occur. In other embodiments, a forwarding table entry 360 is a port index indicating which port on the device a received packet will be forwarded on. If CEC packets are to be forwarded, translation module 315 determines whether translation is required. If translation module 315 is not present in a particular embodiment, CEC packets will be forwarded as is.

The CEC emulation module 310 maintains a CEC address list 370 which indicates the state of each possible CEC address value. In one embodiment, the states include: InUseLocal, which indicates that the address is assigned to an HDMI device 120 on the locally attached HDMI link 130; Bridged, which indicates that the address is being emulated on behalf of an HDMI device 120 not on the locally attached HDMI link 130, so that packets having this destination address will be forwarded over the network link 150; and Free, which indicates that the address is not used locally or remotely.

The CEC forwarding module 320 maintains the forwarding table 350 in cooperation with the CEC emulation module 310. More specifically, when an address entry in the CEC address list 370 is set to the Bridged state, the corresponding entry in the forwarding table 350 is set so that forwarding will occur (e.g., bForward = True). When an address entry in the CEC address list 370 is set to other than the Bridged state, the corresponding entry in the forwarding table 350 is set so that forwarding will not occur (e.g., bForward = False).

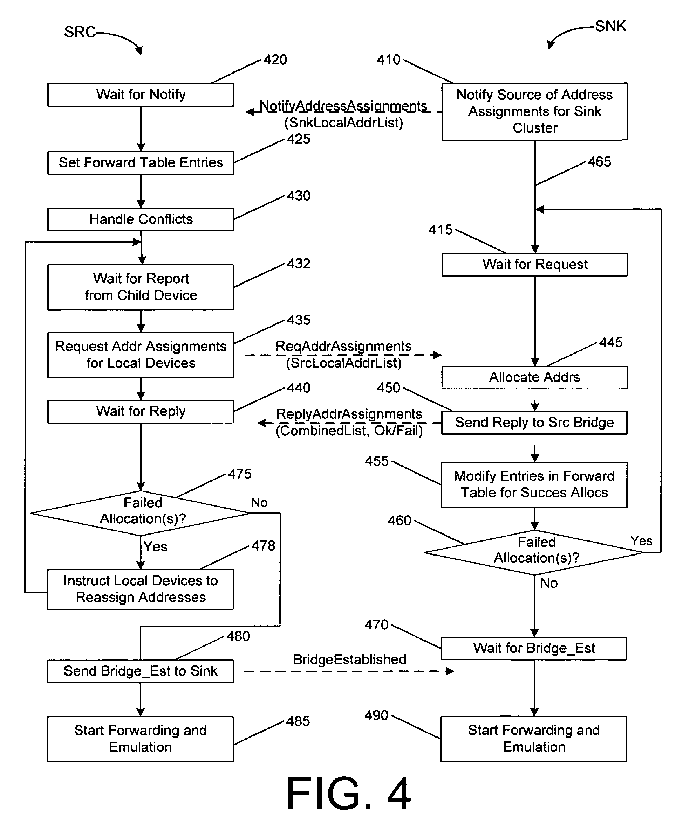

The CEC emulation module 310 maintains address state information by exchanging information with its peer on the other side of the network link 150. More specifically, a source bridge 140-SRC and a sink bridge 140-SNK exchange information about CEC address assignments in a cooperative manner to provide emulation of HDMI devices 120. FIG. 4 is a diagram that describes interactions between the source bridge 140-SRC and the sink bridge 140-SNK, according to some embodiments disclosed herein. Operations performed by the source bridge 140-SRC will be shown as boxes on the left side of the diagram, while operations performed by the sink bridge 140-SNK will be shown as boxes on the right side of the diagram. Interaction between the two sides of the CEC bridge 140 will be shown as arrows between the two sides.

The sink bridge 140-SNK begins at box 410 by sending an address notification to the source bridge 140-SRC over the network link 150. In this example embodiment, the notification takes the form of a Notify Address Assignments message. The Notify Address Assignments message includes a list of each HDMI device 120 attached to the sink bridge 140-SNK through its local HDMI link 130, that is, a list of devices in the HDMI sink cluster 110-SNK. Each list entry includes a CEC logical address, a device type, and an HDMI physical address. Having notified the source bridge 140-SRC of addresses in use in the HDMI sink cluster 110-SNK, the sink bridge 140-SNK then waits at box 415 for an address assignment request from the source bridge 140-SRC.

The sink bridge 140-SNK creates the list from address reports received on the HDMI link 130 of the sink bridge 140-SNK. As should be appreciated, during initialization each HDMI device 120 determines its own CEC logical address, CEC physical address, and device type. More specifically, each HDMI device 120 assigns itself a CEC logical address and learns its CEC physical address and device type from its directly-connected HDMI sink device 120-SNK. This directly-connected device may be viewed as the parent, so that a HDMI sink device 120-SNK can have more than one child, but each child has only one parent. Each HDMI device 120 then reports this information by broadcasting a ReportPhysicalAddress to all HDMI devices 120. HDMI devices 120 use this discovery mechanism to learn of other devices on the same CEC bus. The sink bridge 140-SNK leverages this mechanism to learn of locally attached HDMI devices 120, storing this information in a local CEC address list. This list is used to construct the list sent to the source bridge 140-SRC at box 410. In some embodiments, the sink bridge 140-SNK rearranges the order of entries in the list before sending to the source bridge 140-SRC.

The local list also includes a temporary CEC logical address which the sink bridge 140-SNK has allocated for its own use. In some embodiments, the sink bridge 140-SNK uses a logical address having type Player or Recorder for its temporary CEC logical address. When the sink bridge 140-SNK and the source bridge 140-SRC begin communicating, the sink bridge 140-SNK may then use another logical address if the temporary address is in use by an HDMI device 120 on the source cluster. The local CEC address list may be stored as part of the CEC address list 370 that provides information to the CEC forwarding module 320 (e.g., with a flag indicating a local address), or the local CEC address list may be maintained separately from the CEC address list 370.

The source bridge 140-SRC begins at box 420 by waiting for the address notification from the sink bridge 140-SNK. On receiving the Notify Address Assignments message, at box 425 the source bridge 140-SRC examines the received list of addresses assigned to devices in the sink cluster 110-SNK. The source bridge 140-SRC updates the local forwarding table 350 so that CEC messages to listed addresses will be forwarded to the sink bridge 140-SNK. Next, at box 430 the source bridge 140-SRC checks the received list of addresses assigned to devices in the sink cluster 110-SNK for conflicts with addresses already assigned to the devices in the (local) source cluster 110-SRC. If any conflict is detected, the source bridge 140-SRC handles the conflict by instructing all HDMI devices 120 in the source cluster 110-SRC to undergo the CEC address assignment process. In some embodiments, this instruction is performed by deasserting and then reasserting the HDMI HotPlug signal, with a minimum pulse duration as specified by the HDMI standard.

Next, at box 432 the source bridge 140-SRC determines if an address report from an HDMI child device was received earlier at box 420. The child device is the HDMI device 120 that is directly coupled to the local HDMI link 130. These reports were described earlier in connection with the creation of the local address list for the sink bridge 140-SNK. If the address report from the child device has already been received, the source bridge 140-SRC proceeds directly to box 435. Otherwise, the source bridge 140-SRC waits for this event at box 432.

At box 435, the source bridge 140-SRC sends a Request Address Assignments message to the sink bridge 140-SNK over the network link 150. The Request Address Assignments message includes a list of each HDMI device 120 attached to the source bridge 140-SRC through its local HDMI link 130, that is, a list of devices in the HDMI source cluster 110-SRC. Each list entry includes a CEC logical address, a device type, and an HDMI physical address. The source bridge 140-SRC then waits at box 440 for a reply to the request for address assignment.

The source bridge 140-SRC creates the list from address reports received on the HDMI link 130 of the source bridge 140-SRC and sent to the source bridge 140-SRC at box 410. The contents of the list may vary, depending on the timing of address reports sent by the various local HDMI devices 120. However, as noted above, this list does include at least the CEC address of the child of the source bridge 140-SRC. The local list also includes a temporary CEC logical address which the source bridge 140-SRC has allocated for its own use. In some embodiments, the source bridge 140-SRC uses CEC logical address zero for its temporary CEC logical address.

As mentioned above, the sink bridge 140-SNK waits at box 415 for the address assignment request from source bridge 140-SRC. At box 445 the sink bridge 140-SNK begins processing the request by allocating each of the requested addresses. Next, at box 450, the sink bridge 140-SNK responds to the address assignment request by sending a ReplyAddressAssignment message to the source bridge 140-SRC over the network link 150. The address list in the reply contains the same addresses as the request, but may be reordered. The reply also includes a code indicating whether each address was successfully allocated, or if the requested allocation failed because that address is already in use by a device located in the HDMI sink cluster 110-SNK. In some embodiments, the failure code is the same value as the CEC UnregisteredAddress value (0x0F).

After sending the reply, the sink bridge 140-SNK continues processing at box 455, where the sink bridge 140-SNK updates the local forwarding table 350 with the successfully allocated addresses. By virtue of adding these addresses to the table 350, CEC messages to those addresses will be forwarded to the source bridge 140-SRC when the sink bridge 140-SNK finishes the process of FIG. 4. Next, at box 460, the sink bridge 140-SNK determines whether allocation of any of the requested addresses failed earlier at box 445. If all requested addresses were successfully allocated, the sink bridge 140-SNK then waits at box 470 for a notification from the source bridge 140-SRC that the bridge has been established.

If, however it is determined at box 460 that allocation of at least one requested address failed at box 445, the sink bridge 140-SNK continues at box 415, where the sink bridge 140-SNK waits for another Request Address Assignments message. Receipt of this message is expected to occur eventually due to pulsing of the HotPlug signal at the source side.

At box 475, having finished waiting at box 440 to receive a Reply Address Assignment message, the source bridge 140-SRC begins processing the received Reply Address Assignment message. The message includes a list of logical addresses requested by the source bridge 140-SRC, along with an indication of whether each address was successfully allocated by the other side, that is, can be used by a device in the source cluster 110-SRC. The source bridge 140-SRC checks the list at box 475 for failed allocations, and if any address failed to be allocated, the source bridge 140-SRC continues at box 478 and instructs all HDMI devices 120 in the source cluster 110-SRC to undergo the CEC address reassignment process. In some embodiments, this instruction is performed by deasserting and then reasserting the HDMI HotPlug signal. The source bridge 140-SRC then continues processing at box 432. As described above, at box 432 the source bridge 140-SRC waits for a CEC address report from its HDMI child device. The flow after box 432 was described above.

Once the source bridge 140-SRC has ensured that all the devices in the HDMI source cluster 110-SRC have CEC addresses that do not conflict with devices in the HDMI sink cluster 110-SNK, the source bridge 140-SRC sets up the local forwarding table 350 so that CEC messages addressed to devices in the HDMI sink cluster 110-SNK will be forwarded to the sink bridge 140-SNK. The source bridge 140-SRC is thus ready to begin emulation and forwarding, so at box 480 the source bridge 140-SRC notifies the sink bridge 140-SNK that the bridge has been established. Finally, at box 485 the source bridge 140-SRC begins the operations of CEC forwarding and CEC emulation described herein. It should be noted that until the source bridge 140-SRC reaches box 485, no emulation occurs, and instead the source bridge 140-SRC responds to its own temporary logical address (e.g., a TV).

As noted above, the sink bridge 140-SNK waits at box 470 for a notification from the source bridge 140-SRC that the bridge has been established. At this point, the sink bridge 140-SNK has ensured that the devices in the HDMI sink cluster 110-SNK have CEC addresses that do not conflict with devices in the HDMI source cluster 110-SRC. The sink bridge 140-SNK also sets up the local forwarding table 350 so that CEC messages addressed to devices in the HDMI source cluster 110-SRC will be forwarded to the source bridge 140-SRC. However, the sink bridge 140-SNK does not begin CEC forwarding and CEC emulation until the source bridge 140-SRC is ready. On receiving such a notification from the source bridge 140-SRC, at box 490 the sink bridge 140-SNK begins the operations of CEC forwarding and CEC emulation described herein. Each CEC bridge 140 continues forwarding and emulation until an asynchronous event is received. It should be noted that until the sink bridge 140-SNK reaches box 490, no emulation occurs, and instead the sink bridge 140-SNK responds to its own temporary logical address (e.g., a player device).

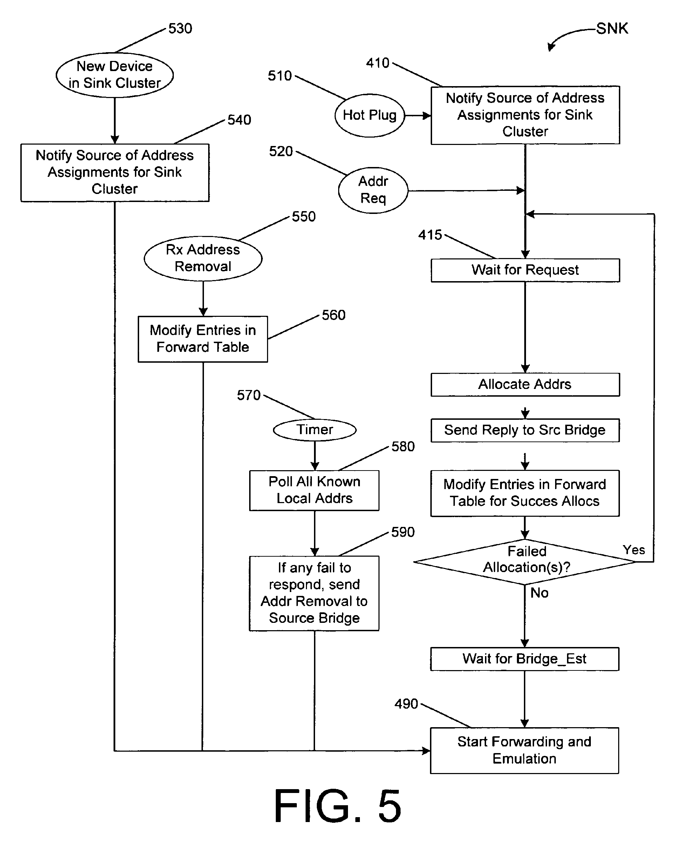

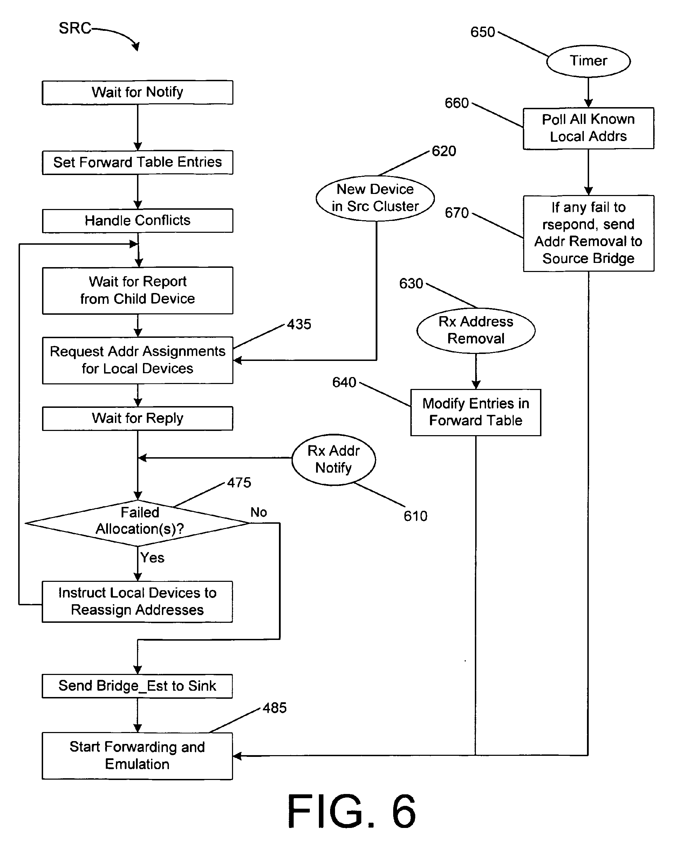

Handling of various asynchronous events will now be described in connection with FIGS. 5 and 6. FIG. 5 is a diagram showing asynchronous event handling for the sink bridge 140-SNK, according to some embodiments disclosed herein. Since some of the event handling involves actions already described in connection with FIG. 4, the sink portion (right hand side) of FIG. 4 is also shown in FIG. 5. An HDMI Hot Plug assertion event 510 indicates that CEC addresses have been reassigned within the local HDMI cluster 110. In response to the Hot Plug assertion event 510, the sink bridge 140-SNK begins processing at box 410, where sink bridge 140-SNK discovers, and then notifies the source bridge 140-SRC of all devices in the HDMI sink cluster 110-SNK. The sink bridge 140-SNK then continues processing from box 410 as described earlier in connection with FIG. 4.

An AddressRequest event 520 indicates that the sink bridge 140-SNK has received a Request Address Assignments message from the source bridge 140-SRC. As noted earlier, this message includes a list of all devices in the HDMI source cluster 110-SRC. In response to the AddressRequest event 520, the sink bridge 140-SNK begins processing at box 445, where sink bridge 140-SNK processes the list of addresses that are requested for devices in the HDMI source cluster 110-SRC. The sink bridge 140-SNK then continues processing from box 445 as described earlier in connection with FIG. 4.

A NewSinkDevice event 530 indicates that a new HDMI device in the sink cluster 110-SNK has reported use of a CEC logical address. In response to the NewSinkDevice event 530, at box 540 the sink bridge 140-SNK notifies the source bridge 140-SRC of all devices in the HDMI sink cluster 110-SNK. This notification includes the newly reporting HDMI device. The sink bridge 140-SNK then continues with the CEC forwarding and CEC emulation operations at box 490.

A RxAddressRemoval event 550 indicates that the sink bridge 140-SNK has received an message indicating that a HDMI device in the source cluster 110-SRC has been removed and is no longer using a particular CEC address. In response to the RxAddressRemoval event 550, at box 560 the sink bridge 140-SNK updates the local forwarding table 350 so that CEC messages to this address will no longer be forwarded to the source bridge 140-SRC. The sink bridge 140-SNK then continues with the CEC forwarding and CEC emulation operations at box 490.

A CheckRemoval event 570 is generated periodically by a timer. In response, at box 580 the sink bridge 140-SNK sends a CEC polling command to all known local CEC logical addresses in the source cluster 110-SRC. At box 590, if any devices failed to respond to the poll within a predefined time period, then the sink bridge 140-SNK treats the non-responding devices as having been removed from the local HDMI bus. The sink bridge 140-SNK therefore notifies the source bridge 140-SRC of the device removal by sending an AddressRemoval message to the source bridge 140-SRC over the non-HDMI interface 340. The sink bridge 140-SNK also deletes the address of the removed device from the local forwarding table 370. The sink bridge 140-SNK then continues with the CEC forwarding and CEC emulation operations at box 490.

FIG. 6 is a diagram showing asynchronous event handling for the source bridge 140-SRC, according to some embodiments disclosed herein. Since some of the event handling involves actions already described in connection with FIG. 4, the source portion (left hand side) of FIG. 4 is also shown in FIG. 6.

An AddressNotify event 610 indicates that the source bridge 140-SRC has received a Notify Address Assignments message from the sink bridge 140-SNK. As noted earlier, this message includes a list of all devices in the HDMI sink cluster 110-SNK. In response to the AddressNotify event 610, the source bridge 140-SRC begins processing at box 475, where source bridge 140-SRC processes the list of addresses for devices in the HDMI sink cluster 110-SNK and handles conflicts as described earlier. If there is a conflict, the source bridge 140-SRC continues with box 478 as described in FIG.4, otherwise it continues processing from box 475 in FIG. 4. In some scenarios, the conflicts handling may result in sending a RequestAddressAssignments message to the sink bridge 140-SNK, as described herein.

A NewSourceDevice event 620 indicates that a new HDMI device in the source cluster 110-SRC has reported use of a CEC logical address. In response to the NewSourceDevice event 620, the source bridge 140-SRC begins processing at box 435, where the source bridge 140-SRC asks the sink bridge 140-SNK to assign the new address. The source bridge 140-SRC then continues processing from box 435 as described earlier in connection with FIG. 4.

An RxAddressRemoval event 630 indicates that the source bridge 140-SRC has received a message indicating that a HDMI device in the sink cluster 110-SNK has been removed and is no longer using a particular CEC address. In response to the RxAddressRemoval event 630, at box 640 the source bridge 140-SRC updates the local forwarding table 350 so that CEC messages to this address will no longer be forwarded to the sink bridge 140-SNK. The source bridge 140-SRC then continues with the CEC forwarding and CEC emulation operations at box 485.

A CheckRemoval event 650 is generated periodically by a timer. In response, at box 660 the source bridge 140-SRC sends a CEC polling command to all known local CEC logical addresses in the source cluster 110-SRC. At box 670, if any devices failed to respond to the poll within a predefined time period, then the source bridge 140-SRC treats the non-responding devices as having been removed from the local HDMI bus. The source bridge 140-SRC therefore notifies the sink bridge 140-SNK of the device removal by sending an AddressRemoval message to the sink bridge 140-SNK over the non-HDMI interface 340. The source bridge 140-SRC also deletes the address of the removed device from the local forwarding table 370. The source bridge 140-SRC then continues with the CEC forwarding and CEC emulation operations at box 485.

Assignment of CEC logical addresses has been discussed in some detail above. As noted earlier, logical address assignment is part of CEC emulation. Logical addresses which are not assigned are thus unemulated. Viewed another way, unemulated logical addresses are those CEC logical addresses that are present on one CEC bridge 140 but that cannot be set in the forwarding table 350 of the CEC bridge 140. This may result, for example, from a limited number of entries in the forwarding table 350. Handling of unemulated addresses by both bridges 140 will now be discussed, starting with the source bridge 140-SRC.

On the source bridge 140-SRC, if the sink bridge 140-SNK sends Notify Address Assignments message with more logical addresses than the source bridge 140-SRC has room for in the forwarding table 350, then any unassigned logical addresses are set to the Unemulated state. If a device in the source cluster 110-SRC allocates itself an logical address that is in the Unemulated state, the source bridge 140-SRC does not include that unemulated address in the Request Address Assignments message sent to the sink bridge 140-SNK.

If a CEC message is sent by an HDMI device 120 in the source cluster 110-SRC having an unemulated address, but is targeted to an emulated address, the message is replied to locally by the source bridge 140-SRC in a manner appropriate for the specific CEC message type. For example, the source bridge 140-SRC may reply to a CEC GiveDeviceVendorld message by supplying the vendor identifier of the source bridge 140-SRC. If a CEC message is sent to an HDMI device 120 having an address which is unemulated by the sink bridge 140-SNK, that message is also replied to locally by the source bridge 140-SRC.

As noted above, one bridge may send the other an AddressRemoval message to indicate removal of an HDMI device 120 in the indicating HDMI cluster 110. Such AddressRemoval messages may involve unemulated addresses. In one scenario, the source bridge 140-SRC receives an AddressRemoval message for an emulated address. In that scenario, the source bridge 140-SRC checks for an address conflict, *i.e.,* a situation where an unemulated address becomes emulated and a local device with the now emulated address exists. If found, the source bridge 140-SRC initiates reallocation of CEC logical addresses by pulsing the HDMI HotPlug signal.

An AddressRemoval message from the sink bridge 140-SNK may instead remove an HDMI device 120 in the sink cluster 110-SNK that is not currently being emulated by the source bridge 140-SRC. In such a scenario, if an HDMI device 120 in the source cluster 110-SRC is already using that address, the source bridge 140-SRC sends a new Request Address Assignments message, requesting use of this unemulated address. If the sink bridge 140-SNK replies with a successful allocation, forwarding is established; otherwise, this is handled as a normal address allocation failure. As such, the source bridge 140-SRC pulses the HDMI HotPlug signal to trigger all devices at the sink bridge 140-SNK to allocate new logical addresses.

In yet another scenario, the AddressRemoval message from the sink bridge 140-SNK may remove both emulated and unemulated addresses. In this scenario, the source bridge 140-SRC checks for address conflicts after reassigning logical addresses. If there are conflicts, the source bridge 140-SRC pulses the HDMI HotPlug signal; otherwise, the source bridge 140-SRC sends a Request Address Assignments message for any devices with the same logical addresses as the unemulated ones which have been removed.

Receipt of a Notify Address Assignments message or a ReplyAddressAssignment message may occur in one or both of the following scenarios. One, an emulated address becomes unemulated on the sink side because of the presence of a higher priority device. Two, an unemulated address becomes emulated on the sink side because of the disappearance of a higher priority device. Some embodiments of the source bridge 140-SRC do not distinguish between the two scenarios, but handle both as follows. On receipt of a Notify Address Assignments message or a ReplyAddressAssignment message, the source bridge 140-SRC reassigns the local logical addresses. If the reassigned (emulated) addresses differ from what were present before, the source bridge 140-SRC pulses the HDMI HotPlug signal to refresh the devices in the source cluster 110-SRC. When the source bridge 140-SRC receives new CEC address reports as a result of the refresh, any additions or disappearances in unemulated logical addresses are processed as if an AddressRemoval message was received. In addition, an unemulated address message is sent to the sink bridge 140-SNK. In this manner, when an unemulated address becomes emulated on source side, the source bridge 140-SRC sends another RequestAddressAssignment message and handles the reply is handled in the normal manner, as described above in connection with FIG. 4. When an emulated address becomes unemulated on the source side, then CEC messages sent to that address will no longer be forwarded by the source bridge 140-SRC. It should be noted that an address conflict cannot occur with an unemulated address, since HDMI source devices 140-SRC cannot know an address is occupied unless the CEC bridge 140 emulates the address.

Having discussed handling of unemulated addresses by the source bridge 140-SRC, handling by the sink bridge 140-SNK will now be discussed. As described earlier, the sink bridge 140-SNK processes Request Address Assignments messages from the source bridge 140-SRC. That is, the source bridge 140-SRC asks the sink bridge 140-SNK if the sink bridge 140-SNK can emulate certain logical addresses, or if those logical addresses are already in use by devices in the sink cluster 110-SNK. It is possible that a Request Address Assignments message includes more addresses than the sink bridge 140-SNK can support, for example, more than the number of entries in the local forwarding table 350. In such a case, any addresses which are successfully allocated but cannot be emulated are not included in the ReplyAddressAssignment message list. The sink bridge 140-SNK then sends an UnemulatedAddress message that includes the address requested by the source bridge 140-SRC that cannot be emulated by the sink bridge 140-SNK.

The sink bridge 140-SNK may receive an address report indicating a new HDMI device in the sink cluster 110-SNK. In some embodiments of the sink bridge 140-SNK, if this newly discovered device reports an address which is unemulated by the sink bridge 140-SNK, the sink bridge 140-SNK does not notify the source bridge 140-SRC of the unemulated address through a Notify Address Assignments message.

As described above, receipt of either a Request Address Assignments message or an AddressRemoval message may cause the sink bridge 140-SNK to reassign logical addresses. The newly reassigned address is sent to the source bridge 140-SRC via a ReplyAddressAssignment message, and the unassigned one via an UnemulatedAddress message. Thus, the UnemulatedAddress message is symmetrical: both the source bridge 140-SRC and the sink bridge 140-SNK use this message to inform the other side which addresses are unemulated.

As should be appreciated, the message set used by the CEC bridge 140 (e.g., Notify Address Assignments message, UnemulatedAddress message, etc.) and sent over the network link 150 may use any suitable format. One such message format is shown below:

Request Address Assignments message:
MessageType (uint16) - RequestAddressAssignments=Ox01.
DeviceMap (uint16) - Logical address present bitmap. A 16-bit little endian value with bit n set if logical address n is present on source cluster 110-SRC. At least one device must be present.
DeviceDescriptor(uint8; uint8; uint16) - Array of descriptors, each of which includes logical address, device type, and physical address. The first device in the array is the HDMI device immediately attached to the source bridge 140-SRC. The DeviceMap field indicates how many array entries are present. Device type can be unknown. Physical address can be 0xF.F.F.F if unknown, except that first device's physical address cannot be 0xF.F.F.F.

Reply Address Assignments message:
MessageType (uint16) - ReplyAddressAssignments=0x02.
CECPhysicalAddress (packed uint16 in big endian): CEC Physical address read by the sink bridge 140-SNK.
DeviceMap (uint16) - Logical address present bitmap. A 16-bit little endian value with bit n set if logical address n is present on source cluster 110-SRC.
AddressDescriptor(uint8; uint8) - Array of descriptors, each of which includes logical address requested and logical address actually allocated. A value of 0x0F indicates the allocation failed.

Notify Address Assignments message:
MessageType (uint16) - NotifyAddressAssignments=0x03.
CECPhysicalAddress (packed uint16 in big endian): CEC Physical address read from the HDMI sink device.
DeviceMap (uint16) - Logical address present bitmap. A 16-bit little endian value with bit n set if logical address n is present on the sink cluster 110-SNK. Can be zero.
DeviceDescriptor(uint8; uint8; uint16) - Array of descriptors, each of which includes logical address, device type, and physical address. The first device in the array is the HDMI device immediately attached to the source bridge 140-SRC. The DeviceMap field indicates how many array entries are present. Device type can be unknown. Physical address can be 0xF.F.F.F if unknown, except that first device's physical address cannot be 0xF.F.F.F.

Request Sink Assignments message:
MessageType (uint16) - RequestSinkAssignments=0x04. This message is the inverse of the NotifyAddressAssignments message, and is used by the source bridge 140-SRC to ask for the addresses in use by the sink bridge 140-SNK.
Reserved (uint16).

Address Removal message:
MessageType (uint16) - AddressRemoval=0x05.
DeviceMap (uint16) - Logical address present bitmap. A 16-bit little endian value with bit n set if logical address n is no longer present on the local cluster.

Bridge Established message:
MessageType (uint16) - BridgeEstablished=0x06. This message notifies the sink bridge 140-SNK that the source bridge 140-SRC has successfully allocated logical addresses, such that the sink bridge 140-SNK can begin forwarding CEC messages destined for devices on the source cluster 110-SRC.

CEC message:
MessageType (uint16) - CECMessage=0x07. This message is an actual CEC message which is forwarded over the bridge.
Length (uint16) - Length of CEC message in bytes, including the header.
Data (uint8) - The CEC message itself including the CEC header byte.

Unemulated Address message:
MessageType (uint16) - UnemulatedAddress=0x08.
DeviceMap (uint16) - Logical address present bitmap. A 16-bit little endian value with bit n set if logical address n is unemulated.

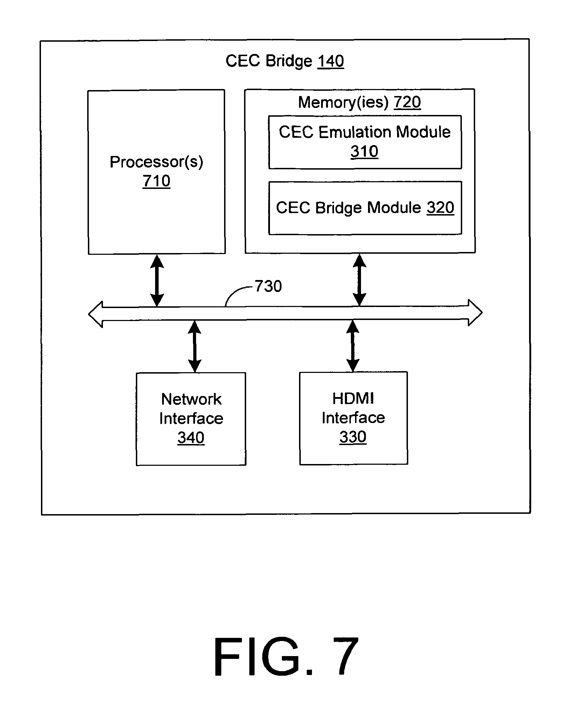

FIG. 7 is a block diagram of the CEC bridge 140 according to an embodiment of the present disclosure. The CEC bridge 140 includes at least one processor circuit, for example, having a processor 710 and a memory 720, both of which are coupled to a local interface 730. The local interface 730 may comprise, for example, a data bus with an accompanying address/control bus or other bus structure as can be appreciated. The CEC bridge 140 also includes an HDMI interface 330 and a non-HDMI interface 340.

Stored in the memory 720 are both data and several components that are executable by the processor 710. In particular, stored in the memory 720 and executable by the processor 710 are the CEC emulation module 310, the CEC translation module 315, and the CEC forwarding module 320. It is understood that there may be other applications, components, services, or modules that are stored in the memory 720 and are executable by the processor 710 as can be appreciated. For any component discussed herein that is implemented in the form of software, any one of a number of programming languages may be employed such as, for example, C, C++, C#, Objective C, Java, JavaScript, Perl, PHP, Visual Basic, Python, Ruby, Delphi, Flash, or other programming languages.

A number of software components are stored in the memory 720 and are executable by the processor 710. In this respect, the term "executable" means a program file that is in a form that can ultimately be run by the processor 710. Examples of executable programs may be, for example, a compiled program that can be translated into machine code in a format that can be loaded into a random access portion of the memory 720 and executed by the processor 710, source code that may be expressed in proper format such as object code that is capable of being loaded into a random access portion of the memory 720 and executed by the processor 710, or source code that may be interpreted by another executable program to generate instructions in a random access portion of the memory 720 and executed by the processor 710, etc. An executable program may be stored in any portion or component of the memory 720 including, for example, random access memory (RAM), read-only memory (ROM), hard drive, solid-state drive, USB flash drive, memory card, optical disc such as compact disc (CD) or digital versatile disc (DVD), floppy disk, magnetic tape, or other memory components.

The processor 710 may take the form of, for example, a microprocessor, network processor, microcontroller, reconfigurable processor, extensible processor, graphics processor, digital signal processor, etc. The processor 710 may be of electrical or of some other available construction. The processor 710 may represent multiple processors and the memory 720 may represent multiple memories. Such multiple processors and memories may operate in parallel processing circuits, respectively. In such a case, the local interface 730 may be an appropriate network or switching arrangement that facilitates communication between any two of the multiple processors 710, between any of the processors 710 and any of the memories 720, or between any two of the memories 720, etc. The local interface 730 may comprise additional systems designed to coordinate this communication, including, for example, performing load balancing.

The memory 720 is defined herein as including both volatile and nonvolatile memory and data storage components. Volatile components are those that do not retain data values upon loss of power. Nonvolatile components are those that retain data upon a loss of power. Thus, the memory 720 may comprise, for example, random access memory (RAM), read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive, and/or other memory components, or a combination of any two or more of these memory components. In addition, the RAM may comprise, for example, static random access memory (SRAM), dynamic random access memory (DRAM), or magnetic random access memory (MRAM) and other such devices. The ROM may comprise, for example, a programmable read-only memory (PROM), an erasable programmable read-only memory (EPROM), an electrically erasable programmable read-only memory (EEPROM), or other like memory device.

Any logic or application described herein (including the CEC emulation module 310, the CEC translation module 315, and the CEC forwarding module 320) that comprises software or code can be embodied in any non-transitory computer-readable medium for use by or in connection with an instruction execution system such as, for example, the processor 710 in a computer system or other system. In this sense, the logic may comprise, for example, statements including instructions and declarations that can be fetched from the computer-readable medium and executed by the instruction execution system. In the context of the present disclosure, a "computer-readable medium" can be any medium that can contain, store, or maintain the logic or application described herein for use by or in connection with the instruction execution system. The computer-readable medium can comprise any one of many physical media such as, for example, magnetic, optical, or semiconductor media. More specific examples of a suitable computer-readable medium would include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read-only memory (EEPROM), or other type of memory device.

Although the CEC emulation module 310 and the CEC forwarding module 320 and other various systems described herein may be embodied in software or code executed by a general purpose processor as discussed above, as an alternative the same may also be embodied in dedicated hardware or a combination of software/general purpose hardware and dedicated hardware. If embodied in dedicated hardware, each can be implemented as a circuit or state machine that employs any one of or a combination of a number of technologies. These technologies may include, but are not limited to, discrete logic, a programmable logic device, an application specific integrated circuit (ASIC), a field programmable gate array (FPGA), a system on chip (SoC), a system in package (SiP), or any other hardware device having logic gates for implementing various logic functions upon an application of one or more data signals, Such technologies are generally well known by those skilled in the art and, consequently, are not described in detail herein.

The diagrams of FIGS. 4, 5, and 6 show the functionality and operation of an implementation of portions of the CEC bridge 140. If embodied in software, each block may represent a module, segment, or portion of code that comprises program instructions to implement the specified logical function(s). The program instructions may be embodied in the form of source code that comprises human-readable statements written in a programming language or machine code that comprises numerical instructions recognizable by a suitable execution system such as one of the processors 710 in a computer system or other system. The machine code may be converted from the source code, etc. If embodied in hardware, each block may represent a circuit or a number of interconnected circuits to implement the specified logical function(s).

Although the diagrams of FIGS. 4, 5, and 6 show a specific order of execution, it is understood that the order of execution may differ from that which is depicted. For example, the order of execution of two or more blocks may be scrambled relative to the order shown. Also, two or more blocks shown in succession in the diagrams of FIGS. 4, 5, and 6 may be executed concurrently or with partial concurrence. Further, in some embodiments, one or more of the blocks shown in the diagrams of FIGS. 4, 5, and 6 may be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present disclosure. It is understood that the diagrams of FIGS. 4, 5, and 6 merely provide an example of the many different types of functional arrangements that may be employed to implement the operation of portion(s) of the CEC bridge 140 as described herein. As an alternative, the diagrams of FIGS. 4, 5, and 6 may be viewed as depicting an example of steps of a method implemented in the CEC bridge 140 (FIG. 1) according to one or more embodiments.

It should be emphasized that the above-described embodiments of the present disclosure are merely possible examples of implementations set forth for a clear understanding of the principles of the disclosure. Many variations and modifications may be made to the above-described embodiment(s) without departing substantially from the spirit and principles of the disclosure. All such modifications and variations are intended to be included herein within the scope of this disclosure and protected by the following claims.

## Claims

1. A device comprising:
an HDMI interface;
a network interface;
at least one processor; and
code executable by the at least one processor, the code comprising:
logic that emulates a CEC command directed to any of a cluster of remote HDMI devices, wherein none of the remote HDMI devices are coupled to the device through the HDMI interface.

2. The device of claim 1, the code further comprising:
logic that communicates with a remote CEC emulation device over the network interface, wherein the remote HDMI devices are coupled to the remote CEC emulation device through another HDMI interface.

3. The device of claim 1, the code further comprising:
logic that receives the CEC command directed to one of the remote HDMI devices; and
logic that forwards the CEC command over the network interface.

4. The device of claim 3, the code further comprising:
logic that determines whether translation of the CEC command is appropriate; and
logic that, when translation is determined to be appropriate, translates the CEC command before forwarding the CEC command over the network interface.

5. The device of claim 1, the code further comprising:
logic that receives a CEC emulation message over the non-HDMI interface, the emulation message including a CEC logical address assignment for one of the remote HDMI devices coupled through the HDMI interface,
wherein the logic that emulates begins emulation of the one of the remote HDMI devices after receiving the CEC logical address assignment.

6. The device of claim 1, the code further comprising:
logic that receives a CEC emulation message over the non-HDMI interface, the emulation message including a request for a CEC logical address assignment for one of the remote HDMI devices;
logic that determines whether a conflict exists between the CEC logical address and any of a cluster of local HDMI devices coupled through the HDMI interface;
wherein the logic that emulates begins emulation of the one of the remote HDMI devices after determining that no conflict exists.

7. A system comprising:
a sink-side bridge including a first HDMI interface and a first network interface,
a source-side bridge including a second HDMI interface and a second network interface; and
the sink-side bridge configured to:
discover any of a cluster of first HDMI devices coupled through the first HDMI interface, the plurality of first HDMI devices including an HDMI sink device; and
notify the source-side bridge, via the first network interface, of a corresponding CEC logical address assignment for each of the discovered first HDMI devices;
the source-side bridge configured to:
discover any of a cluster of second HDMI devices coupled through the second HDMI interface; and
request from the sink-side bridge, via the second network interface and in response to a received notification from the sink-side bridge, a CEC logical address assignment for each of the discovered second HDMI devices.

8. The system of claim 7, the sink-side bridge further configured to:
allocate, in response to the request from the source-side bridge, a CEC logical address for each of the discovered second HDMI devices; and
reply to the request from the source-side bridge with an indication of the allocated CEC logical address for each of the discovered second HDMI devices.

9. The system of claim 8, the sink-side bridge further configured to determine whether the allocation of each of the CEC logical addresses failed, wherein the indication in the reply includes a failure indication for any of the CEC logical addresses for which the allocation failed.

10. The system of claim 7, the sink-side bridge further configured to determine whether a CEC bus included the first HDMI interface is powered on, wherein the reply is conditional on the determination that the CEC bus is powered on.

11. The system of claim 7, wherein the request includes a requested CEC logical address for each of the discovered second HDMI devices, and the sink-side bridge is further configured to determine whether a conflict exists for each of the requested CEC logical addresses, and wherein the indication in the reply includes an unregistered address indication for any of the CEC logical addresses for which a conflict exists.

12. The system of claim 11, the source-side bridge further configured to:
receive the reply from the sink-side bridge; and
in response to the reply including the unregistered address indication, deassert and then reassert a HotPlugDetect signal on the second HDMI interface.

13. The system of claim 11, the source-side bridge further configured to:
receive the notification from the sink-side bridge, the notification including an assigned CEC logical address for each of the discovered first HDMI devices; and
determine whether a conflict exists between any of the assigned CEC logical addresses for the discovered first HDMI devices and the requested CEC logical address for each of the discovered second HDMI devices; and
in response to the determination that a conflict exists, deassert and then reassert a HotPlugDetect signal on the second HDMI interface.

14. A method comprising the steps of:
a sink-side bridge discovering any of a cluster of first HDMI devices coupled to the sink-side bridge through a first HDMI interface, the plurality of first HDMI devices including an HDMI sink device;
a source-side bridge discovering any of a cluster of second HDMI devices coupled to the source-side bridge through a second HDMI interface;
the sink-side bridge notifying the source-side bridge, via a non-HDMI network, of a corresponding CEC logical address assignment for each of the discovered first HDMI devices; and
the source-side bridge requesting from the sink-side bridge, via the non-HDMI network and in response to the received notification from the sink-side bridge, a CEC logical address assignment for each of the discovered second HDMI devices.

15. The method of claim 14, further comprising the step of:
the sink-side bridge emulating CEC behavior of each of the discovered second HDMI devices.
